(19) Europäisches Patentamt
European Patent Office
Office européen des brevets

(11) **EP 1 986 018 B1**

(12) **EUROPEAN PATENT SPECIFICATION**

(45) Date of publication and mention
of the grant of the patent:
**19.11.2014 Bulletin 2014/47**

(51) Int Cl.:
***G01S 5/16*** *(2006.01)*       *G01S 3/783* *(2006.01)*

(21) Application number: **07107090.8**

(22) Date of filing: **27.04.2007**

(54) **Position and orientation determination**

Positions- und Richtungserkennung

Détermination de la position et de l'orientation

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**29.10.2008 Bulletin 2008/44**

(73) Proprietor: **Thales Alenia Space Italia S.p.A.
00131 Roma (IT)**

(72) Inventors:
• **Cesare, Stefano
94117 Arcueil Cedex (FR)**

• **Pisani, Marco
94117 Arcueil Cedex (FR)**

(74) Representative: **Esselin, Sophie et al
Marks & Clerk France
Conseils en Propriété Industrielle
Immeuble Visium
22, Avenue Aristide Briand
94117 Arcueil Cedex (FR)**

(56) References cited:
**EP-A- 0 537 623        EP-A- 1 813 957
US-A1- 2005 043 866**

**Description**

The present invention relates to an apparatus and method for determining the relative arrangement of a plurality of objects. In particular, the invention relates to the determination of the relative position and orientation of two bodies, for example two satellites in a formation flying arrangement.

In any space mission based on a formation of two or more satellites, it is necessary to measure the relative position and attitude of each pair of satellites in order to know and/or control the geometry of the formation. The terms attitude and orientation are used interchangeably herein.

A known system for measuring the relative distance of a pair of satellites uses laser ranging based on time of flight measurement. The achievable precision is of the order of a millimetre. The distance measurement precision provided by such a system can be improved using an interferometer fed by laser radiation having a synthetic wavelength created by the superposition of two laser beams with slightly different frequencies. If the synthetic wavelength is longer than the measurement precision provided by the time of flight technique, then the synthetic-wavelength interferometer can improve the distance measurement precision to the order of some micrometers.

However, such known systems do not measure the position along the axes transversal to the line joining the two satellites nor the relative attitude of the two satellites. Relative attitude measurements are typically obtained using star trackers installed on the two satellites. Thus two separate measurement systems are required, one for measuring distance and one for measuring orientation. Furthermore, the use of standard star trackers does not provide a measurement accuracy at the 1-arcsecond level, and also requires that a separate measurement is carried out at each satellite and that at least one of the satellites transmits the results of the measurement to the other so that the results obtained by the two satellites can be compared and the relative orientation of the satellites can be calculated.

It is also known to measure the relative position and attitude of two satellites during a rendezvous or docking procedure. Typically rendezvous or docking sensors are provided, in which a camera on a first satellite looks at a pattern of reference markers (retro-reflectors, or lights) provided on a second satellite. A similar idea is disclosed by EP 0 537 623. The system relies on the pattern, position and separation of the reference markers on the second satellite being known. By comparing the pattern, position and separation of the image of the reference markers appearing in the field of view of the camera at the first satellite with the known pattern, position and separation of the reference markers on the second satellite, the relative orientation and separation of the two satellites can be calculated. Such a system has a limited working range, typically 100 metres or less, and provides a measurement accuracy that is far from what is needed for a typical formation flying mission.

It is an aim of the present invention, as defined by the claims, to provide an improved or at least alternative apparatus and method for measuring the arrangement of a first body relative to a second body, for example a first satellite relative to a second satellite. In certain aspects, the invention provides for the measurement of the 3d position of a first satellite relative to a second satellite, and in particular the measurement of two rotation angles defining the orientation of one satellite relative to another about the two axes orthogonal to the line joining the two satellites. In some aspects of the invention the rotation angle about the line joining the two satellites is determined by the additional use of polarization analyzers, although determination of that angle is usually less critical for applications involving satellite formations than determination of the other parameters representing the relative position and orientation of the two satellites.

In certain preferred aspects of the invention, the relative position and attitude of two satellites in formation flying may be determined to an accuracy of at least :

- 1 mm along the line joining the two satellites, for a relative distance of ~100 m.
- 0.1 mm along the axes transversal to the line joining the two satellites
- 1 arcsec about the axes transversal to the line joining the two satellites

In a first, independent aspect there is provided apparatus for determining a relative arrangement of a first satellite and a second satellite, comprising detection means at the second satellite for detecting radiation transmitted from the first satellite, characterized in that the detection means comprises a plurality of detectors, each detector being provided at a respective different, known location relative to each other detector, such that in operation each detector has a different view of a source of the radiation at the first satellite, each detector being configured to produce a respective detection signal in response to radiation received from the source.

Preferably the apparatus further comprises processing means configured to process the detection signals together in dependence on the location of each detector relative to each other detector.

In operation, the detection signal received for each detector relative to the detection signal obtained for the or each other detector is typically dependent on both the location of the detectors relative to each other, and on the relative arrangement of the first satellite and the second satellite. The location of the detectors relative to each other is known and so the relative arrangement of the first satellite and the second satellite may be determined efficiently by processing the detection signals together, taking into account the location of each detector relative to each other detector.

The processing of the signals together may comprise directly comparing, combining, fitting to a model or otherwise processing together the detection signals in dependence on the location of each detector relative to each other detector. Alternatively, the processing of the signals together may comprise carrying out an initial process or set of processes on the detection signal for each detector separately to produce a respective output and then combining, comparing, fitting to a model or otherwise processing together the outputs in dependence on the location of each detector relative to each other detector. The initial process or set of processes may include for instance one or more of demodulation, signal averaging, and fitting to a model. Each output may comprise, for instance, the value or values of one or more parameters. Alternatively or additionally, the processing of the detection signals together may comprise processing the detection signal for one of the detectors and then using the results of that processing in the processing of the detection signals for the or each other detector, in dependence on the location of the or each other detector relative to that one of the detectors.

Preferably the processing means is configured to process the respective detection signal for each detector in dependence on the position of the detector relative to the position of the or each other detector.

The processing means is preferably configured to obtain a measure of the relative arrangement of the first satellite and the second satellite from the processing together of the detection signals. The measure of the relative arrangement may comprise at least one of a relative distance of separation of the first satellite and the second satellite, a position of the first satellite relative to the second satellite, and orientation of the first satellite relative to the second satellite. Preferably, in operation, the relative position of the first satellite and the second satellite is defined using a Cartesian co-ordinate system with orthogonal x, y and z axes, centred on either the first satellite or the second satellite. Preferably the z-axis is defined as being co-linear with a line joining the first satellite and the second satellite and/or co-linear with the central axis of a beam of the radiation transmitted from the first satellite. Preferably the orientation of the first satellite relative to the second satellite is defined by respective angles of rotation ($\alpha$, $\beta$, $\theta$) of the first satellite or second satellite around each of the x, y and z-axes.

Preferably the detection means is for detecting a beam of radiation transmitted from the first satellite with a pre-determined beam profile, and the processing means is configured to compare at least one characteristic of the respective detection signal received at each detector to the pre-determined beam profile to determine a relative position of each detector with respect to the beam.

The beam profile may represent the variation of at least one aspect of the transmitted radiation with position across the beam. Preferably the beam profile represents the variation of at least one aspect of the transmitted radiation in a direction or directions orthogonal to the direction of transmission of the beam. Preferably the radiation source is included in the apparatus and is arranged to produce a beam that provides radiation to each of the detectors simultaneously.

The processing means may be configured to compare at least one characteristic of the respective detection signal received at each detector to the pre-determined beam profile to determine a relative position of each detector with respect to the beam.

That feature is particularly important and so in a further independent aspect there is provided apparatus for determining a relative displacement of a first object and a second object, comprising:- a source of radiation at the first object, for transmitting a beam of radiation towards the second object; and detection means at the second object for detecting radiation from the source, characterized in that:- the source of radiation is configured to transmit the beam of radiation from a known position at the first object with a pre-determined beam profile; the detection means comprises a plurality of detectors, each detector being provided at a respective different, known location relative to each other detector, such that each detector has a different view of the radiation source, each detector being configured to produce a respective detection signal in response to radiation received from the source; and the apparatus further comprises processing means configured to compare at least one characteristic of the respective detection signal from each detector to the pre-determined beam profile to determine the relative position of each detector with respect to the beam.

Thereby, the lateral displacement of the second satellite, or body, with respect to the beam axis may be determined. The at least one characteristic may comprise the value of a parameter representative of an aspect of the radiation. The processing means may be configured to compare the relative values of the parameters to the profile, or to carrying out a fitting procedure to fit the values of the parameters to points on the profile.

Preferably, the at least one characteristic is representative of the power of the received radiation, and the pre-determined beam profile is a profile of transmitted power as a function of position.

The profile may represent the variation of transmitted power as a function of position in a direction or directions orthogonal to the direction of transmission. The at least one characteristic may comprise or be derived from the amplitude of detection signal.

The pre-determined beam profile may have the form of a Gaussian distribution.

The detection means may comprise at least three detectors. By providing at least three detectors it is possible to determine unambiguously both the relative orientation and position in all directions of the first satellite and the second satellite by using a single source of radiation at the first satellite. Preferably the detection means comprises three detectors.

The detectors may be arranged in a symmetrical arrangement. The arrangement of detectors may have at least one axis of symmetry. Each of the detectors may be at a respective vertex of a triangle. Preferably, each of the detectors is at a respective vertex of an equilateral triangle.

Preferably, each detector is operable to distinguish between radiation received from different points in the field of view of the detector. Each detector may comprise a detection area and means for identifying a part of the detection area where an image, for instance a light spot, falls. Each detector may be a Position Sensing Detector (PSD). Alternatively, each detector may comprise a plurality of detection elements, and the detector may be arranged such that radiation from each area in the field of view of the detector may fall on a respective detection element in a one to one relationship. Alternatively or additionally each detector may comprise means for scanning across the field of view of the detector so as to detect radiation from each area in the field of view in turn.

The processing means may be configured to determine, for each of the detectors, at least one detection parameter representative of the position of radiation received from the radiation source in the field-of-view of the detector, and to process the detection parameters in dependence upon the relative position of the detectors. Thereby a measure of the relative arrangement of the first object and the second object may be determined.

The at least one detection parameter may be representative of at least one angular co-ordinate or at least one linear co-ordinate.

The processing means may be configured to average the values of the or each at least one parameter across the detectors thereby to obtain a measure of the relative arrangement of the first object and the second object.

Preferably for each detector, the or each detection parameter is representative of a respective one of a co-latitude angle between the path of radiation from the radiation source and a boresight axis of the detector, and an azimuth angle between the path of radiation from the radiation source and an axis perpendicular to the boresight axis of the detector.

The processing means may be configured to determine for each detector, $i$, an azimuth angle $\alpha_i$ between the path of radiation from the radiation source and a boresight axis of the detector, and the processing means may be configured to average the azimuth angles obtained from the detectors. Preferably the detectors are arranged such that averaging the co-latitude angles gives the co-latitude angle of the first satellite relative to the second satellite.

The processing means may be configured to determine for each detector $i$, a co-latitude angle $\beta_i$ between the path of radiation from the radiation source and an axis perpendicular to the boresight axis of the detector, and the processing means may be configured to average the co-latitude angles $\beta_i$ obtained from the detectors. Preferably the detectors are arranged such that averaging the co-latitude angles gives the co-latitude angle of the first satellite relative to the second satellite.

The processing means may be configured to solve numerically a set of equations linking the detection parameters for each of the detectors to the linear and angular co-ordinates defining the relative position and orientation of the first and second satellites, so as to obtain values for at least one of the linear and angular co-ordinates.

The determining means may be configured to determine for each detector, $i$, an azimuth angle $\alpha_i$ between the path of radiation from the radiation source and a boresight axis of the detector, and a co-latitude angle $\beta_i$ between the path of radiation from the radiation source and an axis perpendicular to the boresight axis of the detector, and the processing means is configured to solve numerically the set of equations (2) to (7) as recited herein.

The processor may be configured to solve numerically the set of equations using a fitting procedure, such as a non-linear least squares fitting procedure, or any other method to solve sets of non-linear equations.

Preferably the apparatus includes the radiation source at the first satellite for transmitting the radiation from the first satellite to the second satellite. The source of radiation may be configured to generate the radiation or, alternatively or additionally, may be configured to reflect or guide radiation generated at some other location towards the second satellite. The source of the radiation from the point of the view of the second satellite may be the point or area at the first satellite where the radiation exits the first satellite.

The apparatus may include means for modulating the radiation. Preferably the modulating means is configured to modulate the amplitude of the radiation. It is particularly advantageous to modulate the radiation in the case where background radiation signals are present (for instance from direct or reflected sun or star light) as it enables rejection of such background signals. The detectors may comprise Position Sensing Detectors (PSDs), and in that case modulation of the radiation is also advantageous because it can get rid of biases and low-frequency noises characteristic of such detectors and of their electronics. Use of the amplitude modulation/demodulation enables a significant reduction in the signal to noise ratio of the Position Sensing Detectors at low frequencies.

The apparatus may further comprise means for determining the modulation of the radiation, in dependence upon the respective detection signal received at at least one of the detectors. The means for determining the modulation may be configured to determine the frequency and phase of the modulation. The means for determining the modulation may be configured to combine the detection signals received at the detectors to produce a combined signal, and to determine the modulation in dependence upon the combined signal

Preferably the means for determining the modulation comprises phase locked loop circuitry

The detection means may be configured to demodulate the detection signals detected at the detectors in dependence upon the modulation determined by the modulation determining means

The apparatus may further comprise a polarizer at the first satellite arranged such that radiation emitted by the radiation source is polarized. Alternatively or additionally the apparatus may comprise means for determining the polarization of radiation received at the detection means and for determining a relative orientation of the two satellites in dependence upon the polarization. Preferably the direction of polarization of the first polarizer relative to the orientation of the first satellite is known, and the orientation of the polarization determining means at the second satellite is known. Thus, the relative orientation of the first and second satellites about an axis joining the first satellite and the second satellite may be determined by analyzing the polarization of the radiation received at the detection means.

Preferably the distance between the satellites is less than or equal to 150 km, preferably less than or equal to 100 km, and more preferably less than or equal to 50km. Preferably the distance between the satellites is greater than or equal to 100m, preferably greater than or equal to 1km, and more preferably greater than or equal to 10km. Preferably the distance between the satellites is between 10 m and 10 km.

The radiation source may comprise a laser source. The radiation may be laser radiation. Preferably the radiation has a frequency in the range 250 THz to 1000 THz. The radiation may have a single frequency. The radiation source is configured to transmit radiation of a power in the range 1 mW to 1W. Preferably the detectors are configured to detect radiation having a power in the range 0.1 micro W to 0.1 mW.

In a further, independent aspect of the invention there is provided a method of determining a relative arrangement of a first satellite and a second satellite, comprising transmitting radiation from the first satellite to the second satellite; and detecting the radiation at the second satellite, characterized in that the method further comprises providing a plurality of detectors, each detector being provided at a respective different, known location relative to each other detector, such that each detector has a different view of the radiation source, each detector being configured to produce a respective detection signal in response to radiation received from the source; and process the detection signals together in dependence on the location of each detector relative to each other detector.

Any feature in one aspect of the invention may be applied to other aspects of the invention, in any appropriate combination. In particular, apparatus features may be applied to method features and *vice versa.*

Embodiments of the invention will now be described, by way of example only, with reference to the accompanying drawings in which:

Figure 1 is a schematic illustration of the apparatus according to the preferred embodiment;
Figure 2 is a schematic diagram of the circuitry used to demodulate the signals received at the detectors of the apparatus of Figure 1;
Figure 3 is a schematic illustration of a detector forming part of the apparatus of Figure 1;
Figure 4 is graph of intensity versus lateral displacement, showing the variation in intensity across the width of a beam of radiation transmitted by the apparatus of Figure 1 according to a preferred mode of operation; and
Figure 5 is a schematic illustration of a variant of the apparatus of Figure 1, which includes a polarising beamsplitter.

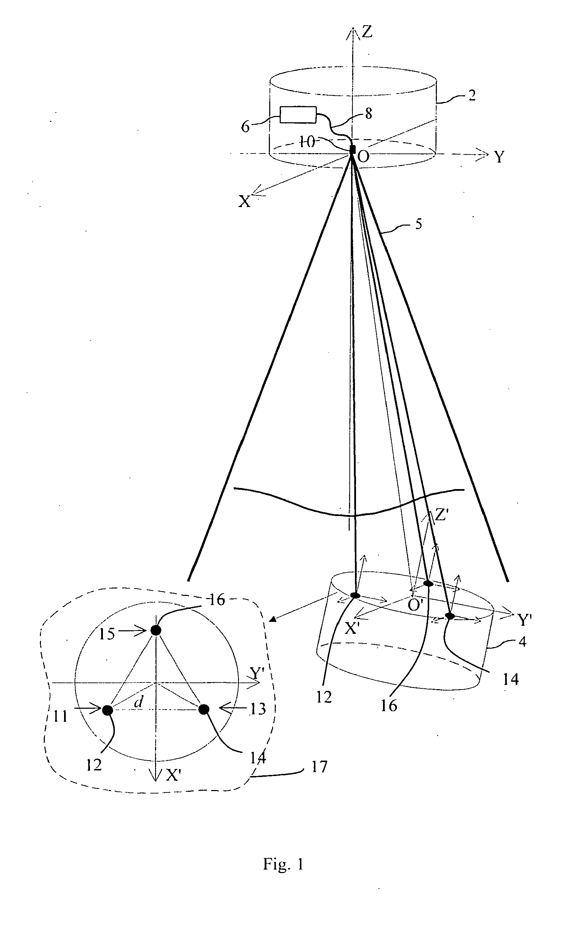

An apparatus for measuring the relative position and attitude of a first satellite 2 and a second satellite 4 according to the preferred embodiment is shown schematically in Figure 1.

A radiation source in the form of a laser beam emitter is mounted on the first satellite 2, and is composed of a laser source 6 coupled to a single mode optical fibre 8 which in turn is coupled to an optical system 10. In the preferred embodiment, the output of the laser beam emitter is amplitude modulated using an oscillator (not shown).

A detection system is mounted on the second satellite 4 and comprises three detectors 11 13 15 each of which is positioned at the focal plane of a respective telescope 12 14 16. Figure 1 includes a planar view 17 in a direction orthogonal to the face of the second satellite 4 and it can be seen that the three telescopes 12 14 16 are located at the vertices of an equilateral triangle 18 centred at the origin O' of the satellite 2 (in the following we will denote as $d$ the distance of each telescope from O'). Thus, each of the telescopes 12 14 16, and in turn each of the detectors 11 13 15, has a different view of the first satellite 4. It can be seen that the view from each telescope 12 14 16 depends on the relative position and orientation of the satellites.

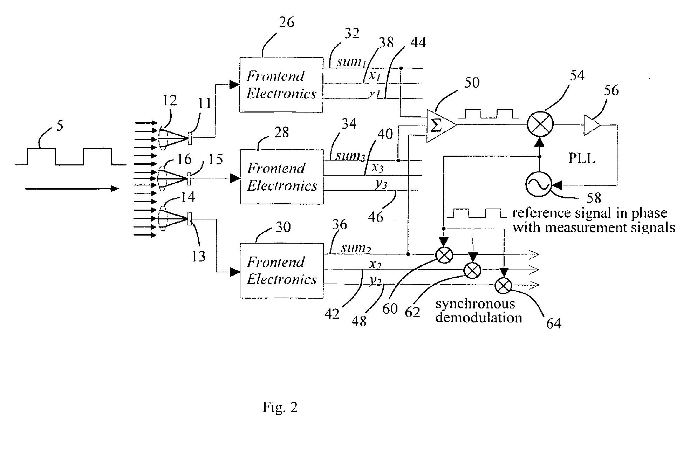

The detectors 11 13 15 and their associated circuitry are shown in more detail in Figure 2. Each of the detectors 11 13 15 is a Position Sensing Detector (PSD) and is located at the focal plane of a respective telescope 12 14 16. Each detector 11 13 15 comprises a four-electrode photodiode structure having a two-dimensional detection area.

The photocurrent generated by the photodiode in response to a light spot received at the respective detection area is dependent upon the optical power carried by the light; the portions of that photocurrent flowing through the four electrodes is dependent upon the position of the light spot on the detection area.

The signal across two of the four electrodes is representative of the position in the $x_i$ direction of the light spot on the detection area in a local reference frame, referred to as the telescope reference frame. The signal across the other two of the four electrodes is representative of the position in the $y_i$ direction of the light spot on the detection area in the local reference frame.

Outputs from the PSD and associated front end electronic circuitry provides three quantities: the power of the light collected by the telescope and focused on the detector (represented by the sum of the outputs of the four electrodes of the PSD) and the coordinates $(\xi_{iX}, \xi_{iY})$ of the light spot focused on the detection area in the telescope reference frame. The light spot is the image of the laser beam formed on the detection area.

Each point on the two-dimensional detection area corresponds to a viewing direction in the field-of-view of the telescope in a one-to-one relationship. Each detector 11 13 15 is connected to a processor which processes output signals from the detectors representative of radiation detected by the detectors, via respective front end electronic circuitry 26 28 30.

Considering the front end electronic circuitry 30 for one of the detectors 13, the electronic circuitry 30 has an output 42 for a signal, referred to as the $x_2$ signal, representative of the x co-ordinate of the position of the light spot on the detection area of the detector 13, an output 48 for a signal, referred to as the $y_2$ signal, representative of the y co-ordinate of the position of the light spot on the detection area of the detector 13, and an output 36 for the summed signal which is a sum of the $x_2$ and $y_2$ signals and is representative of the power of the received light spot.

The electronic circuitry 26 28 for the other detectors 11 15 has outputs 38 40 for the $x_i$ signals representative of the position of the light spot in the $x_i$ direction in the respective telescope reference frame, equivalent outputs 44 46 for the $y_i$ signals representative of the position of the light spot in the $y_i$ direction in the respective telescope reference frame, and equivalent outputs 32 34 for the summed signals, for those detectors 11 15.

Each output 32 34 36 for the summed signals is connected to a summing amplifier 50 which is connected in turn to phase locked loop circuitry 52 comprising a mixer 54 an amplifier 56 and a voltage controlled oscillator 58.

Returning to consideration of the front end electronic circuitry 30 for one of the detectors 13 in particular, it can be seen from Figure 2 that the output 36 for the summed signal is connected to a mixer 60, that the output 42 for the $x_2$ signal is connected to a further mixer 62, and the output 48 for the signal representing the $y_2$ is connected to another mixer 64. The output from the phase locked loop circuitry 52 is connected to each of the mixers 60 62 64.

Each of the outputs from the front end electronic circuitry 26 28 for the other detectors 11 15 is also connected to respective further mixers (not shown) in the same way as illustrated in Figure 2 for the front end electronic circuitry 30 for the detector 13.

The outputs of the mixers 60 62 64 and the outputs of the further mixers (not shown) are each connected to the processor (not shown).

In operation, the radiation source located on the first satellite 2 emits a laser beam 5 illuminating the second satellite 4 where it is observed by three detectors 11 13 15 each comprising a telescope 12 14 16.

In the preferred embodiment, the laser beam emitter generates a beam 5 with a divergence sufficient to illuminate each of the telescopes 12 14 16 located on the satellite 2 and with a "clean" (i.e. without ripples generated by an improper beam truncation or other aberrations) Gaussian power distribution across each of its cross sections. That is achieved by using as a light emitter the outlet of the single mode optical fibre 8 coupled to the laser source 6 as mentioned above. In alternative embodiments, spatial filters are used at the laser source output.

The laser beam 5 emitted by the laser beam emitter is amplitude modulated, as mentioned above, and the signal to noise ratio of the detection of the laser beam by the Position Sensitive Detectors is increased in the preferred embodiment by demodulating the output of the Position Sensitive Detectors at the modulation frequency. That is particularly advantageous as Position Sensitive Detectors operate under large bias and are subject to low frequency noise. Use of the amplitude modulation/demodulation produces a significant increase in the signal to noise ratio at the Position Sensitive Detectors and enables the rejection of background signals (for instance from direct or reflected sun or star light).

As discussed above, the front end electronic circuitry 26 28 30 for each of the detectors 11 13 15 outputs an $x_i$ signal representative of the $x_i$ co-ordinate (on output 38 40 42) and a $y_i$ signal representative of the $y_i$ co-ordinate (on output 44 46 48) of the position of the image of the laser beam on the respective detection area, according to the respective telescope reference frame. Each set of front-end electronic circuitry 26 28 30 also outputs a summed signal representative of the received power of the image of the laser beam on a respective summed output 32 34 36.

As the laser beam 5 is amplitude modulated at a modulation frequency, the $x_i$, $y_i$, and summed signals output by the front-end electronic circuitry are also modulated at that modulation frequency.

In order to demodulate the signals output by the front-end electronic circuitry, the phase locked loop circuitry 52 shown in Figure 2 is used to generate a reference signal which is used to demodulate the signals at the set of mixers 60 62 64 in the case of the detector 13 and at the further mixers (not shown) in the case of the other detectors 11 15.

In operation each summed signal from the detectors 11 13 15 output on the summed outputs 32 34 36 is in turn summed by summing amplifier 50 and the resulting signal is passed to the phase locked loop circuitry 52 including the voltage controlled oscillator 58. The signal passed to the phase locked loop circuitry 52 represents the average or total power received across the detectors 11 13 15 and has a phase and frequency which is the same as the phase and frequency of the modulating signal used at the first satellite 2 to modulate the laser beam 5. The voltage-controlled oscillator 58 included in the phase locked loop circuitry 52 is thus synchronized with the oscillator used to modulate the output of the laser beam emitter at the first satellite 2.

The output of the voltage controlled oscillator 58 is used as the reference signal and is passed to the set of mixers 60 62 64, and the further mixers (not shown) to demodulate the output signals from the detectors.

The demodulated output signals from the set of mixers 60 62 64 and the further mixers (not shown) are passed to the processor (not shown) for further processing and analysis. Thus, the processor (not shown) receives demodulated signals representative of the coordinates of the light spot focused on each detector, which in turn is representative of the position of the light beam emitted from the first satellite 2 in the field of view of each telescope, and also receives a demodulated summed signal for each detector representative of the optical power received by that detector.

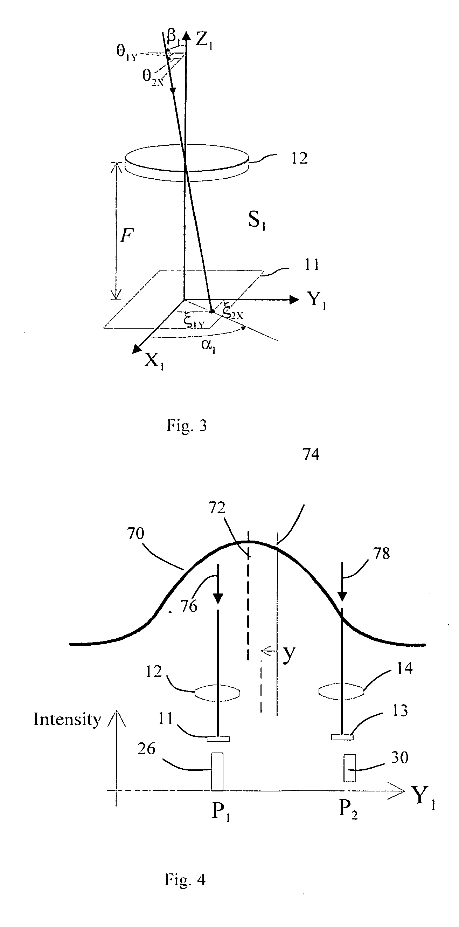

The processor is configured to determine the position of the first satellite 2, in the field of view of each telescope. In particular, and with reference to Figure 3, the processor is configured to determine the co-ordinates $\xi_{iX}$, $\xi_{iY}$ identifying the position of the laser beam image on the detection area located at the focal plane of each telescope. Each set of co-ordinates $\xi_{iX}$, $\xi_{iY}$ is determined with respect to a Telescope Reference Frame (TRF, $O_i$, $X_i$, $Y_i$, $Z_i$) assigned to each telescope with the origin in the centre of its focal plane and the axes nominally aligned to O'X'Y'Z' ($Z_i$ is the boresight axis of the telescope $S_i$).

Each telescope observes the laser beam 5 emitted by the satellite 2 from a different point of view. From the three pairs of coordinates ($\xi_{iX}$, $\xi_{iY}$) identifying the position of the light beam image on the focal planes of the three telescopes 12 14 16, the co-latitude angle ($\beta_i$) between the light beam and the telescope $Z_i$ axis and azimuth angle ($\alpha_i$) of the image relative to the axis $X_i$ is obtained by the processor (see Figure 3):

$$(1) \qquad \alpha_i = \operatorname{atan}\left(\frac{\xi_{iY}}{\xi_{iX}}\right), \ \ \beta_i = \operatorname{atan}\left(\frac{\sqrt{\xi_{iX}^2 + \xi_{iY}^2}}{F}\right),$$

where $F$ is the telescope focal length.

The three pairs of angles ($\alpha_i$, $\beta_i$) measured by the three telescopes 12 14 16 can be related to the linear and angular coordinates (x, y, z, $\varphi$, $\theta$, $\psi$) defining the position of the radiation source (and thus the first satellite 2) relative to the second satellite 4 by means of the following equations (2) to (7), written in the assumption of small rotation angles. In the following analysis, the z axis is defined as being the central axis of the laser beam 5 emitted by the first satellite, and the co-ordinates define the position of the radiation source on the first satellite 2 relative to the origin O' at the second satellite 4. The x and y co-ordinates represent the lateral displacements in the two orthogonal directions transverse to the z axis, $\varphi$ is the angle of orientation of the first satellite 2 relative to second satellite 4 about the x axis, and $\theta$ is the angle of orientation of the first satellite 2 relative to the second satellite 4 about the y axis. $\psi$ is the angle of orientation of the first satellite 2 relative to the second satellite 4 around the z-axis.

$$(2) \qquad (r_1 \cdot \sin(\beta_1))^2 = O_1O_X{}^2 + O_1O_Y{}^2, \ \ (r_2 \cdot \sin(\beta_2))^2 = O_2O_X{}^2 + O_2O_Y{}^2,$$

$$(r_3 \cdot \sin(\beta_3))^2 = O_3O_X{}^2 + O_3O_Y{}^2$$

$$(3) \qquad O_1O_X \cdot \tan(\alpha_1) = O_1O_Y, \ \ O_2O_X \cdot \tan(\alpha_2) = O_2O_Y, \ \ O_3O_X \cdot \tan(\alpha_3) = O_3O_Y$$

with

$$(4) \qquad O_1O_X = -d \cdot \cos(\Theta) - x - y \cdot \psi + z \cdot \theta, \ \ O_1O_Y = d \cdot \sin(\Theta) - y + x \cdot \psi - z \cdot \varphi,$$

$$O_1O_Z = -z - x \cdot \theta + y \cdot \varphi$$

$$(5) \quad O_2O_X = -d \cdot \cos(\Theta) - x - y \cdot \psi + z \cdot \theta, \quad O_2O_Y = -d \cdot \sin(\Theta) - y + x \cdot \psi - z \cdot \varphi,$$

$$O_2O_Z = -z - x \cdot \theta + y \cdot \varphi$$

$$(6) \quad O_3O_X = d - x - y \cdot \psi + z \cdot \theta, \quad O_3O_Y = -y + x \cdot \psi - z \cdot \varphi, \quad O_3O_Z = -z - x \cdot \theta + y \cdot \varphi$$

$$(7) \quad r_i = \sqrt{O_iO_X^2 + O_iO_Y^2 + O_iO_Z^2}, \quad \Theta = 60°$$

In order to simplify the solution of the above set of equations, the processor in the preferred embodiment is configured to exploit an independent measurement of four of the six degrees of freedom (corresponding to the three angular displacements and the three lateral displacements) that can be obtained from the same optical metrology, namely the angles $\varphi$, $\theta$, and the lateral displacements x, y. In fact, from the three pairs of coordinates ($\xi_{iX}$, $\xi_{iY}$) it is possible to compute also the angles $\theta_{iX}$, $\theta_{iY}$ (see Figure 3) as follows:

$$(8) \quad \theta_{iX} = \mathrm{atan}\left(\frac{\xi_{iY}}{F}\right), \quad \theta_{iY} = \mathrm{atan}\left(\frac{\xi_{iX}}{F}\right)$$

In the preferred embodiment, the processor is programmed to determine the three pairs of coordinates ($\xi_{iX}$, $\xi_{iY}$) from the output signals of the detectors and to calculate the three pairs of angles $\theta_{iX}$, $\theta_{iY}$.

The processor is programmed then to calculate the rotation angles $\varphi$, $\theta$ are by averaging the three corresponding angular measurements:

$$(9) \quad \varphi = (\theta_{1X} + \theta_{2X} + \theta_{3X})/3, \quad \theta = (\theta_{1Y} + \theta_{2Y} + \theta_{3Y})/3$$

Equation (9) is an approximation. The closer the satellites are to their nominal position/alignment the more accurate is the approximation. In terms of the reference frames of the two satellites, the closer the origin O' is to the Z axis of the reference frame OXYZ, and the closer the axes X'Y'Z' are parallel to XYZ, the more accurate is the approximation.

The lateral displacements (x, y) are obtained in the preferred embodiment from the imbalance of the power measured by the three detectors 11 13 15, based upon the knowledge that the power distribution of the laser beam cross section has a Gaussian profile established by the emission condition (size and position of the beam waist at departure from the radiation source at the satellite 2) and that the axis of the laser beam (maximum of the Gaussian) is nominally coincident with the z axis.

The position of two of the detectors 11 13 relative to the laser beam during a measurement is shown schematically in Figure 4. The variation of the power distribution across the laser beam as a function of the lateral displacement y is indicated by a solid line 70, which has a Gaussian form. The position of the axis of the laser beam, corresponding to the maximum of the Gaussian distribution is indicated by the dotted line 72, and the position of the midpoint between the detectors 11 13 is indicated by a solid line 74. It can be seen that the detectors 11 13 have a lateral displacement y with respect to the axis of the laser beam and thus that the power received by one of the detectors 11 is greater than the power received by the other of the detectors 13. The power received by each of the detectors 11 13 is indicated schematically by the solid arrows 76 78 which identify the position of each detector with respect to the Gaussian power distribution of the laser beam.

The processor is configured to determine the average power, $P_1, P_2, P_3$ respectively, collected by each telescope 12 14 16, and thus detected by each detector 11 13 15, from the demodulated summed signal output on respective summed output 32 34 36.

The y lateral displacement is obtained by the processor by comparing the powers collected by the telescopes 12 14:

$$(10) \quad y = k_y(P_1 - P_2)/(P_1 + P_2)$$

The x lateral displacement is obtained by the processor by comparing the powers collected by the telescope 16 with the average power, represented by $P_{12}$, collected by the other two telescopes 12 14:

$$(11) \quad x = k_x(P_3 - P_{12})/(P_3 + P_{12}), \ P_{12} = (P_1 + P_2)/2$$

The coefficients $k_x$, $k_y$ are function of the separation between the sensors and of the width of the Gaussian laser beam at the location of the satellite 4. In the preferred embodiment the coefficients $k_x$, $k_y$ are determined by a calibration of the laser beam and are stored at the processor.

Equations (10) and (11) are approximations. The closer the satellites are to their nominal position/alignment the more accurate are the approximations. In terms of the reference frames of the two satellites, the closer the origin O' is to the Z axis of the reference frame OXYZ, and the closer the axes X'Y'Z' are parallel to XYZ, the more accurate are the approximations.

In alternative embodiments, and alternative modes of operation, a numerical solution of the equations (1) to (7) (which are not linear) is used to determine the six coordinates defining the position and orientation of the second satellite 4 in the reference frame of the first satellite 2. In such embodiments and modes of operation the processor is programmed to determine the three pairs of coordinates ($\xi_{iX}$, $\xi_{iY}$) from the output signals of the detectors, and to solve the above equations using a numerical procedure and to determine the values of the parameters x, y, z, $\varphi$, $\theta$, $\psi$ defining the relative position and orientation of the two satellites 2 4.

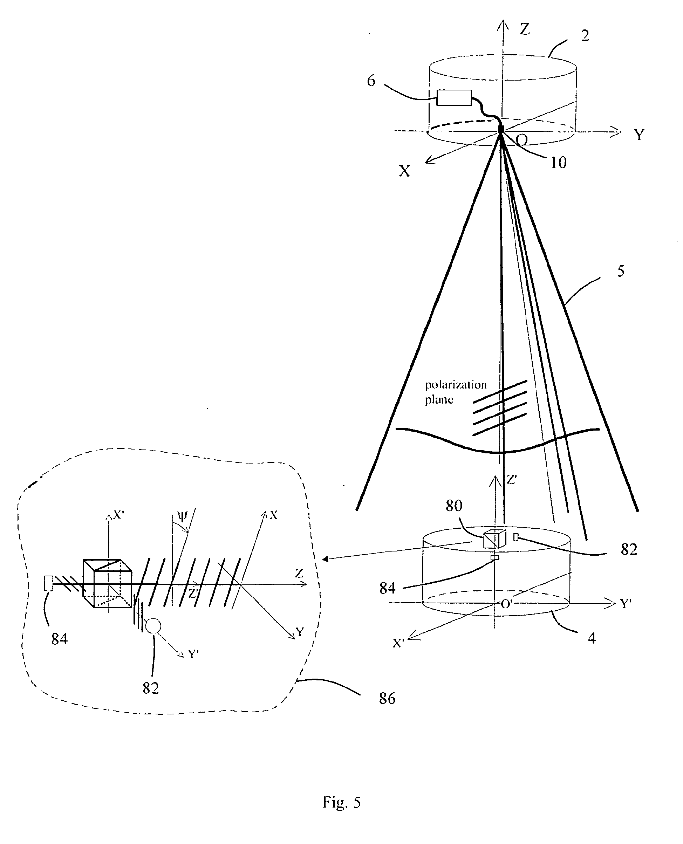

According to the analysis above, it is possible to measure the angle $\psi$ around the axis joining the two satellites. However the sensitivity of the above equations to that parameter $\psi$ becomes smaller and smaller as the two satellites are closer and closer to their nominal alignment (x = 0, y = 0). Therefore in practice, in the case of satellites that parameter $\psi$ is generally not obtained with a good accuracy. At the limit x = 0, y = 0, it cannot be obtained by analysis of the above equations alone. However, in certain variants of the preferred embodiment information concerning parameter $\psi$ is obtained by including an analyzer of the polarization status of the light emitted by the first satellite 2 in the detection means. An example of an apparatus according to such variants of the preferred embodiment is shown in Figure 5.

In the variants of the preferred embodiment illustrated in Figure 5, the laser source 6 located on the first satellite 2 produces a linearly polarised beam. The plane of polarisation is typically oriented in the X-Z plane of the reference frame of the first satellite 2.

A polarizing beamsplitter 80 is located on the second satellite 4, with principal axes aligned to the reference frame of the second satellite 4. Two photodiodes 82 84 are positioned orthogonally to the beamsplitter 80. Outputs from the photodiodes 82 84 are connected to the processor.

The polarizing beamsplitter 80 is operable to split the incoming polarized beam from the laser source into two components, and to direct one of the components to one of the photodiodes 82 and to direct the other component to the other photodiode 84. Figure 5 includes an enlarged view 86 which illustrates the splitting of the beam in more detail.

The respective power ($p_a$, $p_b$) of each of the two components is a function of the orientation of the polarization plane with respect to the X'Z' plane of the satellite reference frame (i.e. of the rotation angle $\psi$ about the axis Z between the reference frames of the two satellites).

In operation each photodiode 82 84 measures the power ($p_a$ or $p_b$) of the respective component of the beam coming from the polarizing beamsplitter 80. These powers are function of the rotation angle $\psi$:

$$(12) \quad p_a = p \sin(\psi), \qquad p_b = p \cos(\psi)$$

The rotation angle $\psi$ is obtained from the measured powers p1, p2 by the processor using the following equation:

$$(13) \quad \psi = \tan^{-1}\left(\frac{p_a}{p_b}\right)$$

The detectors 11 13 15 are not shown in Figure 5 for reasons of clarity, but typically in the apparatus of Figure 5 the detectors 11 13 15 are also present on the second satellite 4. The processor combines the results obtained from the detectors 11 13 15 and the photodiodes in order to obtain the precise relative position and orientation of the satellites.

In alternative embodiments or alternative modes of operation of the preferred embodiment, the phase and frequency of the demodulation signal is not determined from the average power received by the PSD detectors. Instead a radio link is provided between the satellites and information concerning the phase and frequency of the modulation is transmitted from the first satellite 2 to the second satellite 4 via the radio link and the demodulation phase and frequency is set based upon that information. In further alternative embodiments or modes of operation using the GPS/GALILEO navigation system, in which synchronizing oscillators (clocks) are provided on the two satellites 2 4, one oscillator is used for generating the modulation frequency and the other oscillator is used for generating the de-modulation frequency.

In alternative embodiments an array detector, comprising for instance an array of CCDs or CMOSs is used instead of a PSD. In that case each element in an array of detection elements outputs a respective detection signal, and the position of a light spot on the array is determined by processing the output signals from the detection elements.

The embodiments described above have been described with reference to the measurement of the relative displacement and orientation of two satellites. However the invention is not limited only to the measurement of the relative displacement and orientation of two satellites, and, in relation to certain aspects, is used to measure the relative displacement and/or orientation of two or more bodies in general.

It will be understood that the present invention has been described above purely by way of example, and modifications of detail can be made within the scope of the invention.

**Claims**

**1.** Apparatus for determining a relative arrangement of a first object (2) and a second object (4) comprising:-

detection means at the second object (4) for detecting a beam of radiation transmitted by a laser source from the first object (2), the beam of radiation having a pre-deteimined beam profile

the detection means comprises a plurality of detectors (11, 13, 15), each detector being provided at a respective different, known location relative to each other detector, such that in operation each detector has a different view of a source of the radiation (10) at the first object (2), each detector being configured to produce a respective detection signal in response to the radiation,

processing means configured to process the detection signals together in dependence on the location of each detector relative to each other detector, and to exploit at least one characteristic of the respective detection signal received at each detector to determine a relative position of each detector with respect to the beam,

**characterized in that** the at least one characteristic is representative of the power of the received radiation, the pre-determined beam profile is a profile of the power distribution across the beam as a function of position and the relative position of each detector is obtained by comparing the received powers at each detectors.

**2.** Apparatus according to claim 1, wherein the pre-determined beam profile has the form of a Gaussian distribution.

**3.** Apparatus according to any preceding claim, wherein the detection means comprises at least three detectors.

**4.** Apparatus according to any preceding claim, wherein the detectors are arranged in a symmetrical arrangement.

**5.** Apparatus according to claim 3, wherein the detection means comprises three detectors, each of the detectors being at a respective vertex of an equilateral triangle.

**6.** Apparatus according to any of preceding claim, wherein the processing means is configured to determine, for each of the detectors, at least one detection parameter representative of the position of radiation received from the radiation source in the field-of-view of the detector, and to process the detection parameters in dependence upon the relative position of the detectors.

**7.** Apparatus according to claim 6, wherein the at least one detection parameter is representative of at least one angular co-ordinate or at least one linear co-ordinate.

**8.** Apparatus according to claim 6 or 7, wherein the processing means is configured to average the values of the or each at least one parameter across the detectors thereby to obtain a measure of the relative arrangement of the first object and the second object.

9. Apparatus according to Claim 6 or 7, wherein, for each detector, *i*, the or each detection parameter is representative of a respective one of an azimuth angle $\alpha_i$ between the path of radiation from the radiation source and a boresight axis of the detector, and a colatitude angle $\beta_i$ between the path of radiation from the radiation source and an axis perpendicular to the boresight axis of the detector.

10. Apparatus according to Claim 9, wherein the processing means is configured to determine for each detector, *i*, an azimuth angler $\alpha_i$ between the path of radiation from the radiation source and a boresight axis of the detector, and the processing means is configured to average the azimuth angles obtained from the detectors.

11. Apparatus according to Claim 9 or 10, wherein the processing means is configured to determine for each detector *i*, a co-latitude angle $\beta_i$ between the path of radiation from the radiation source and an axis perpendicular to the boresight axis of the detector, and the processing means is configured to average the co-latitude angles $\beta_i$ obtained from the detectors.

12. Apparatus according to Claim 6 or 7, wherein the processing means is configured to solve numerically a set of equations linking the detection parameters for each of the detectors to the three linear and three angular co-ordinates defining the relative position and orientation of the first and second objects, so as to obtain values for at least one of the linear and angular co-ordinates.

13. Apparatus according to Claim 12, wherein the processing means is configured to determine for each detector, *i,* a co-latitude angle $\beta_i$ between the path of radiation from the radiation source and a boresight axis of the detector, and an azimuth angle $\alpha_i$ between the path of radiation from the radiation source and an axis perpendicular to the boresight axis of the detector, and the processing means is configured to solve numerically the set of equations (2) to (7) as recited herein.

14. Apparatus according to any preceding claim, including a radiation source at the first satellite for transmitting the radiation from the first object to the second object, means for modulating the radiation, and means for determining the modulation of the radiation in dependence upon the respective detection signal received at at least one of the detectors.

15. Apparatus according to Claim 14, wherein the means for determining the modulation is configured to combine the detection signals received at the detectors to produce a combined signal, and to determine the modulation in dependence upon the combined signal

16. Apparatus according to Claim 14 or 15, wherein the detection means is configured to demodulate the detection signals detected at the detectors in dependence upon the modulation determined by the modulation determining means.

17. Apparatus according to any preceding claim, further comprising means for determining the polarization of radiation received at the detection means and for determining a relative orientation of the two objects in dependence upon the polarization.

18. Apparatus according to any preceding claim, wherein the two objects (2, 4) are two satellites.

19. A method of determining a relative arrangement of a first object (2) and a second object (4), comprising:-
transmitting radiation from a laser radiation source (10) at the first object (2) to the second object (4), the beam of radiation having a pre-determined beam profile; and
detecting the radiation at the second satellite (4), **characterized in that**:-
providing a plurality of detectors (11, 13, 15), each detector being provided at a respective different, known location relative to each other detector, such that each detector has a different view of the radiation source (10), each detector being configured to produce a respective detection signal in response to radiation received from the source (10); and processing the detection signals together in dependence on the location of each detector relative to each other detector and exploiting at least one characteristic of the respective detection signal received at each detector to determine a relative position of each detector with respect to the beam,
**characterized in that** the at least one characteristic is representative of the power of the received radiation, and the pre-determined beam profile is a profile of power distribution across the beam as a function of position and the relative position of each detector is obtained by comparing the received powers at each detectors.

**EP 1 986 018 B1**

**Patentansprüche**

1. Vorrichtung zum Bestimmen einer relativen Anordnung eines ersten Objekts (2) und eines zweiten Objekts (4), umfassend:

   ein Detektionsmittel am zweiten Objekt (4) zum Detektieren eines Strahls von Strahlung, die durch eine Laserquelle am ersten Objekt (2) übertragen wird, wobei der Strahl von Strahlung ein vorbestimmtes Strahlprofil hat, wobei das Detektionsmittel eine Vielzahl von Detektoren (11, 13, 15) umfasst, wobei jeder Detektor an einem jeweils anderen bekannten Standort relativ zu jedem anderen Detektor bereitgestellt ist, sodass in Betrieb jeder Detektor eine andere Sicht auf eine Quelle der Strahlung (10) am ersten Objekt (2) hat, wobei jeder Detektor dafür konfiguriert ist, als Antwort auf die Strahlung ein jeweiliges Detektionssignal zu erzeugen, ein Verarbeitungsmittel, das dafür konfiguriert ist, die Detektionssignale gemeinsam in Abhängigkeit vom Standort jedes Detektors relativ zu jedem anderen Detektor zu verarbeiten und mindestens ein charakteristisches Merkmal des in jedem Detektor empfangenen jeweiligen Detektionssignals auszunutzen, um eine relative Lage jedes Detektors in Bezug auf den Strahl zu bestimmen, **dadurch gekennzeichnet, dass** das mindestens eine charakteristische Merkmal die Leistung der empfangenen Strahlung darstellt, das vorbestimmte Strahlprofil ein Profil der Leistungsverteilung über den Strahl in Abhängigkeit von der Lage ist und die relative Lage jedes Detektors durch Vergleichen der empfangenen Leistungen an allen Detektoren erhalten wird.

2. Vorrichtung nach Anspruch 1, worin das vorbestimmte Strahlprofil die Form einer Gaußverteilung hat.

3. Vorrichtung nach einem der vorhergehenden Ansprüche, worin das Detektionsmittel mindestens drei Detektoren umfasst.

4. Vorrichtung nach einem der vorhergehenden Ansprüche, worin die Detektoren in einer symmetrischen Anordnung angeordnet sind.

5. Vorrichtung nach Anspruch 3, worin das Detektionsmittel drei Detektoren umfasst, wobei jeder der Detektoren an einem jeweiligen Eckpunkt eines gleichseitigen Dreiecks ist.

6. Vorrichtung nach einem der vorhergehenden Ansprüche, worin das Verarbeitungsmittel dafür konfiguriert ist, für jeden Detektor mindestens einen Detektionsparameter zu bestimmen, der die Lage der von der Strahlungsquelle empfangenen Strahlung im Sichtfeld des Detektors darstellt, und die Detektionsparameter in Abhängigkeit von der relativen Lage der Detektoren zu verarbeiten.

7. Vorrichtung nach Anspruch 6, worin der mindestens eine Detektionsparameter die mindestens eine Winkelkoordinate oder mindestens eine lineare Koordinate darstellt.

8. Vorrichtung nach Anspruch 6 oder 7, worin das Verarbeitungsmittel dafür konfiguriert ist, die Werte des oder jedes mindestens einen Parameters über die Detektoren hinweg zu mitteln, um dadurch ein Maß für die relative Anordnung des ersten Objekts und des zweiten Objekts zu erhalten.

9. Vorrichtung nach Anspruch 6 oder 7, worin für jeden Detektor $i$ der oder jeder Detektionsparameter jeweils eines von Folgendem darstellt, nämlich ein Azimutwinkel $\alpha_i$ zwischen dem Weg der Strahlung von der Strahlungsquelle und einer Mittelachse des Detektors und ein komplementärer Breitenwinkel $\beta_i$ zwischen dem Weg der Strahlung von der Strahlungsquelle und einer zur Mittelachse des Detektors senkrechten Achse.

10. Vorrichtung nach Anspruch 9, worin das Verarbeitungsmittel dafür konfiguriert ist, für jeden Detektor $i$ einen Azimutwinkel $\alpha_i$ zwischen dem Weg der Strahlung von der Strahlungsquelle und einer Mittelachse des Detektors zu bestimmen, und das Verarbeitungsmittel dafür konfiguriert ist, die von den Detektoren erhaltenen Azimutwinkel zu mitteln.

11. Vorrichtung nach Anspruch 9 oder 10, worin das Verarbeitungsmittel dafür konfiguriert ist, für jeden Detektor $i$ einen komplementären Breitenwinkel $\beta_i$ zwischen dem Weg der Strahlung von der Strahlungsquelle und einer zur Mittelachse des Detektors senkrechten Achse zu bestimmen, und das Verarbeitungsmittel dafür konfiguriert ist, die von den Detektoren erhaltenen Breitenwinkel $\beta_i$ zu mitteln.

**12.** Vorrichtung nach Anspruch 6 oder 7, worin das Verarbeitungsmittel dafür konfiguriert ist, ein Gleichungssystem numerisch zu lösen, das die Detektionsparameter für jeden der Detektoren mit den drei linearen und den drei Winkelkoordinaten verknüpft, welche die relative Lage und Ausrichtung des ersten und des zweiten Objekts definieren, um dadurch Werte für mindestens eine der linearen und Winkelkoordinaten zu erhalten.

**13.** Vorrichtung nach Anspruch 12, worin das Verarbeitungsmittel dafür konfiguriert ist, für jeden Detektor $i$ einen komplementären Breitenwinkel $\beta_i$ zwischen dem Weg der Strahlung von der Strahlungsquelle und einer Mittelachse des Detektors und einen Azimutwinkel $\alpha_i$ zwischen dem Weg der Strahlung von der Strahlungsquelle und einer zur Mittelachse des Detektors senkrechten Achse zu bestimmen, und das Verarbeitungsmittel dafür konfiguriert ist, das hierin erwähnte System aus den Gleichungen (2) bis (7) numerisch zu lösen.

**14.** Vorrichtung nach einem der vorhergehenden Ansprüche, aufweisend eine Strahlungsquelle am ersten Satelliten zum Übertragen der Strahlung vom ersten Objekt zum zweiten Objekt, ein Mittel zum Modulieren der Strahlung und ein Mittel zum Bestimmen der Modulation der Strahlung in Abhängigkeit von dem jeweiligen an mindestens einem der Detektoren empfangenen Detektionssignal.

**15.** Vorrichtung nach Anspruch 14, worin das Mittel zum Bestimmen der Modulation dafür konfiguriert ist, die an den Detektoren empfangenen Detektionssignale zu kombinieren, um ein kombiniertes Signal zu erzeugen, und die Modulation in Abhängigkeit von dem kombinierten Signal zu bestimmen.

**16.** Vorrichtung nach Anspruch 14 oder 15, worin das Detektionsmittel dafür konfiguriert ist, die an den Detektoren empfangenen Detektionssignale in Abhängigkeit von der durch das Modulationsbestimmungsmittel bestimmten Modulation zu detektieren.

**17.** Vorrichtung nach einem der vorhergehenden Ansprüche, ferner ein Mittel zum Bestimmen der Polarisation der an den Detektoren empfangenen Strahlung und zum Bestimmen einer relativen Ausrichtung der beiden Objekte in Abhängigkeit von der Polarisation umfassend.

**18.** Vorrichtung nach einem der vorhergehenden Ansprüche, worin die beiden Objekte (2, 4) zwei Satelliten sind.

**19.** Verfahren zum Bestimmen einer relativen Anordnung eines ersten Objekts (2) und eines zweiten Objekts (4), umfassend:

Übertragen von Strahlung von einer Laserstrahlungsquelle (10) am ersten Objekt (2) zum zweiten Objekt (4), wobei der Strahl der Strahlung ein vorbestimmtes Strahlprofil hat; und
Ermitteln der Strahlung am zweiten Satelliten (4), **gekennzeichnet durch**:

Bereitstellen einer Vielzahl von Detektoren (11, 13, 15), wobei jeder Detektor an einem jeweils anderen bekannten Standort relativ zu jedem anderen Detektor bereitgestellt ist, sodass jeder Detektor eine andere Sicht auf die Strahlungsquelle (10) hat, wobei jeder Detektor dafür konfiguriert ist, als Antwort auf von der Quelle (10) empfangene Strahlung ein jeweiliges Detektionssignal zu erzeugen, und
gemeinsames Verarbeiten der Detektionssignale in Abhängigkeit vom Standort jedes Detektors relativ zu jedem anderen Detektor und Ausnutzen mindestens eines charakteristischen Merkmals des in jedem Detektor empfangenen jeweiligen Detektionssignals, um eine relative Lage jedes Detektors in Bezug auf den Strahl zu bestimmen,
**dadurch** gekennzeichnet, dass das mindestens eine charakteristische Merkmal die Leistung der empfangenen Strahlung darstellt, das vorbestimmte Strahlprofil ein Profil der Leistungsverteilung über den Strahl in Abhängigkeit von der Lage ist und die relative Lage jedes Detektors **durch** Vergleichen der empfangenen Leistungen an allen Detektoren erhalten wird.

**Revendications**

**1.** Appareil permettant de déterminer un agencement relatif d'un premier objet (2) et d'un second objet (4) comprenant :

un moyen de détection au niveau du second objet (4) pour détecter un faisceau de rayonnement émis par une source laser à partir du premier objet (2), le faisceau de rayonnement présentant un profil de faisceau prédéterminé.

le moyen de détection comprend une pluralité de détecteurs (11, 13, 15), chaque détecteur étant fourni au niveau d'un emplacement connu, respectivement différent, par rapport à chaque autre détecteur, de sorte que, en cours de fonctionnement, chaque détecteur dispose d'une vue différente d'une source du rayonnement (10) au niveau du premier objet (2), chaque détecteur étant configuré pour produire un signal de détection respectif en réaction au rayonnement,

un moyen de traitement configuré pour traiter les signaux de détection ensemble en fonction de l'emplacement de chaque détecteur par rapport à chaque autre détecteur, et pour exploiter au moins une caractéristique du signal de détection respectif reçu au niveau de chaque détecteur afin de déterminer une position relative de chaque détecteur par rapport au faisceau,

**caractérisé en ce que** la au moins une caractéristique est représentative de la puissance du rayonnement reçu, le profil de faisceau prédéterminé est un profil de la répartition de puissance dans le faisceau en fonction d'une position et la position relative de chaque détecteur est obtenue en comparant les puissances reçues au niveau de chaque détecteur.

2.  Appareil selon la revendication 1, dans lequel le profil de faisceau prédéterminé présente la forme d'une distribution de Gauss.

3.  Appareil selon l'une quelconque des revendications précédentes, dans lequel le moyen de détection comprend au moins trois détecteurs.

4.  Appareil selon l'une quelconque des revendications précédentes, dans lequel les détecteurs sont agencés en un agencement symétrique.

5.  Appareil selon la revendication 3, dans lequel le moyen de détection comprend trois détecteurs, chacun des détecteurs étant au niveau d'un sommet respectif d'un triangle équilatéral.

6.  Appareil selon l'une quelconque des revendications précédentes, dans lequel le moyen de traitement est configuré pour déterminer, pour chacun des détecteurs, au moins un paramètre de détection représentatif de la position d'un rayonnement reçu à partir de la source de rayonnement dans le champ de vision du détecteur, et pour traiter les paramètres de détection en fonction de la position relative des détecteurs.

7.  Appareil selon la revendication 6, dans lequel le au moins un paramètre de détection est représentatif d'au moins une coordonnée angulaire ou d'au moins une coordonnée linéaire.

8.  Appareil selon la revendication 6 ou 7, dans lequel le moyen de traitement est configuré pour calculer une moyenne des valeurs du ou de chaque au moins un paramètre dans les détecteurs afin d'obtenir une mesure de l'agencement relatif du premier objet et du second objet.

9.  Appareil selon la revendication 6 ou 7, dans lequel, pour chaque détecteur, i, le ou chaque paramètre de détection est représentatif d'un angle respectif parmi un angle d'azimut $\alpha_i$ entre le trajet de rayonnement en provenance de la source de rayonnement et un axe de pointage du détecteur, et un angle $\beta_i$ de colatitude entre le trajet de rayonnement en provenance de la source de rayonnement et un axe perpendiculaire à l'axe de pointage du détecteur.

10.  Appareil selon la revendication 9, dans lequel le moyen de traitement est configuré pour déterminer pour chaque détecteur, i, un angle d'azimut $\alpha_1$ entre le trajet de rayonnement en provenance de la source de rayonnement et un axe de pointage du détecteur, et le moyen de traitement est configuré pour calculer une moyenne des angles d'azimut obtenus à partir des détecteurs.

11.  Appareil selon la revendication 9 ou 10, dans lequel le moyen de traitement est configuré pour déterminer pour chaque détecteur, i, un angle $\beta_i$ de colatitude entre le trajet de rayonnement en provenance de la source de rayonnement et un axe perpendiculaire à l'axe de pointage du détecteur, et le moyen de traitement est configuré pour calculer une moyenne les angles $\beta_i$ de colatitude obtenus à partir des détecteurs.

12.  Appareil selon la revendication 6 ou 7, dans lequel le moyen de traitement est configuré pour résoudre de manière numérique un ensemble d'équations liant les paramètres de détection pour chacun des détecteurs aux trois coordonnées linéaires et aux trois coordonnées angulaires définissant la position relative et l'orientation des premier et second objets, de manière a obtenir des valeurs pour au moins une parmi les coordonnées linéaires et angulaires.

**13.** Appareil selon la revendication 12, dans lequel le moyen de traitement est configuré pour déterminer pour chaque détecteur, i, un angle $\beta_i$ de colatitude entre le trajet de rayonnement en provenance de la source de rayonnement et un axe de pointage du détecteur, et un angle d'azimut $\alpha_i$ entre le trajet de rayonnement en provenance de la source de rayonnement et un axe perpendiculaire à l'axe de pointage du détecteur, et le moyen de traitement est configuré pour résoudre de manière numérique l'ensemble des équations (2) à (7) énumérées dans la présente.

**14.** Appareil selon l'une quelconque des revendications précédentes, comprenant une source de rayonnement au niveau du premier satellite pour émettre le rayonnement à partir du premier objet vers le second objet, un moyen permettant de moduler le rayonnement, et un moyen permettant de déterminer la modulation du rayonnement en fonction du signal de détection respectif reçu au niveau d'au moins un des détecteurs.

**15.** Appareil selon la revendication 14, dans lequel le moyen permettant de déterminer la modulation est configuré pour combiner les signaux de détection reçus au niveau des détecteurs afin de produire un signal combiné, et pour déterminer la modulation en fonction du signal combiné.

**16.** Appareil selon la revendication 14 ou 15, dans lequel le moyen de détection est configuré pour démoduler les signaux de détection détectés au niveau des détecteurs en fonction de la modulation déterminée par le moyen de détermination de modulation.

**17.** Appareil selon l'une quelconque des revendications précédentes, comprenant en outre un moyen permettant de déterminer la polarisation du rayonnement reçu au niveau du moyen de détection et permettant de déterminer une orientation relative des deux objets en fonction de la polarisation.

**18.** Appareil selon l'une quelconque des revendications précédentes, dans lequel les deux objets (2, 4) sont deux satellites.

**19.** Procédé de détermination d'un agencement relatif d'un premier objet (2) et d'un second objet (4), comprenant les étapes consistant à :

émettre un rayonnement à partir d'une source de rayonnement laser (10) au niveau du premier objet (2) vers le second objet (4), le faisceau de rayonnement présentant un profil de faisceau prédéterminé ; et
détecter le rayonnement au niveau du second satellite (4), **caractérisé en ce que** ledit procédé comprend les étapes consistant à :

fournir une pluralité de détecteurs (11, 13, 15), chaque détecteur étant fourni au niveau d'un emplacement connu, respectivement différent, par rapport à chaque autre détecteur, de sorte que chaque détecteur dispose d'une vue différente de la source de rayonnement (10), chaque détecteur étant configuré pour produire un signal de détection respectif en réaction à un rayonnement reçu à partir de la source (10) ; et
traiter les signaux de détection ensemble en fonction de l'emplacement de chaque détecteur par rapport à chaque autre détecteur et exploiter au moins une caractéristique du signal de détection respectif reçu au niveau de chaque détecteur afin de déterminer une position relative de chaque détecteur par rapport au faisceau,
**caractérisé en ce que** la au moins une caractéristique est représentative de la puissance du rayonnement reçu, et le profil de faisceau prédéterminé est un profil de répartition de puissance dans le faisceau en fonction de la position et la position relative de chaque détecteur est obtenue en comparant les puissances reçues au niveau de chaque détecteur.

Fig. 1

Fig. 2

Fig. 3

Fig. 4

Fig. 5

**EP 1 986 018 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0537623 A